# EUROPEAN PATENT APPLICATION

(11) **EP 0 522 455 A1**
(43) Date of publication of application: **13.01.1993**
(21) Application number: 92111264.5
(22) Date of filing: 03.07.1992
(51) Int. Cl.: F16C 11/06

(54) **Ball joint head**

(30) Priority: 08.07.1991 IT BO910141 U
(71) Applicant: CHIAVETTE UNIFICATE S.p.A., I-40069 Zola Predosa (IT)
(72) Inventor: Triolo, Innocenzo, I-40033 Casalecchio Di Reno (IT); Caradonna, Carlo, I-40059 Medicina (IT); Salerno, Claudio, I-40133 Bologna (IT)
(74) Representative: Jorio, Paolo

(57) **Abstract**

The ball joint head (1) is coupled in use to a drive device and comprises:
a first spherical body (6) made from steel and formed with a diametral through-hole (7) engaged in use by a first member of the device;
a ring (8) in which the first body (6) is forcedly housed but free to rotate; and
a second steel body (2) having screw means (3 and 4) for attachment to a second member of the device, and an eye (5) in which the ring (8) is fitted.

At least the inner layer of the ring (8) next to the surface of contact with the first body (6) is made of sintered material so as to define pores within the material; these being impregnated with a predetermined lubricant.

## Description

The present invention relates to a ball joint head for coupling to a drive member such as a shaft of a pneumatic or hydraulic actuator, an arm of an automatic or machine tool, etc.

As is known, a ball joint head comprises a body having an internally or externally threaded shank and an eye which houses a spherical body, or ball, with a diametral through-hole with the forced interposition of a ring. The ball is imprisoned in the ring but is free to rotate about its centre.

One of the principle problems found in such heads lies in preventing the ball from seizing against the inner surface of the ring. In a first current solution, the ring is made from bronze and its surface of contact with the ball is constantly supplied with lubricant. A duct for conveying the lubricant to the inside of the ring is formed in the head for this purpose. It will be clear that, because of the work which needs to be carried out on the head to form the lubricant duct, this is expensive to produce and the external system for supplying the lubricant and the lubricant duct need to be checked periodically. A second current solution provides for the formation of a ring from mild steel with lead and the formation of an annular seat within this for housing a layer of antifriction material, for example TEFLON. In this solution, the head does not need continuous lubrication but this does not avoid the serious problem of a reduction in the precision of the joint with time because of the constant increase in the clearance between the ball and the ring. The clearance is due essentially to wear of the antifriction layer which, in time, causes stress due to the different coefficients of thermal expansion of the two elements and due to the mechanical characteristics of the material used for the manufacture of the antifriction layer, to be transmitted to the points of contact between the two elements.

The object of the present invention is to provide a bail joint head which does not have the said disadvantages and which has a system for lubricating the joint which is simple to effect.

Further objects and advantages of the present invention will become clear during the course of the description which follows.

Fundamentally the present invention provides a ball joint head adapted to be coupled to a drive device such as a shaft of pneumatic or hydraulic actuator, an arm of an automatic or machine tool, etc, and including:
a first spherical body, preferably of steel, formed with a diametral through-hole for engagement by a first member of the device;
a ring in which the first body is forced housed but free to rotate about its own centre; and
a second body, preferably of steel, having a shank formed with screw threading selected from external and internal threading, for mechanical connection to a second member of the device, and having an eye in which the ring is fitted;
characterised in that at least the inner layer of the ring next to the surface of contact with the second body is formed from sintered material so as to define pores within the material and in that the pores are impregnated with a predetermined lubricant which fills the pores in the material.

For a better understanding of the present invention a preferred embodiment is now described purely by way of non-limiting example, with reference to the appended drawings, in which:
Figure 1 is an elevational view of a ball joint head;
Figure 2 is a longitudinal section through the head of Figure 1; and
Figure 3 is a section of a detail of the head of Figure 1 on an enlarged scale.

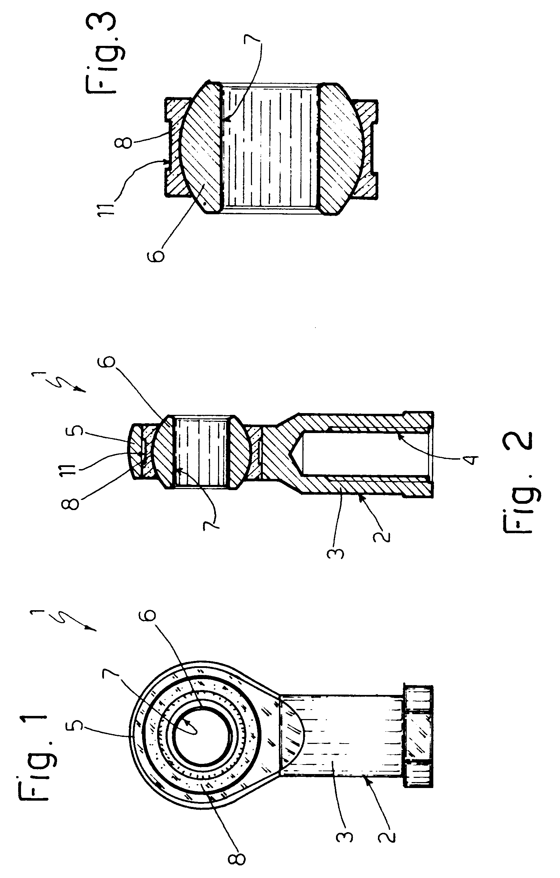

Figure 1 illustrates a ball joint head, generally indicated 1, adapted for coupling to a drive device such as a shaft of a pneumatic or hydraulic actuator, an arm of an automatic or machine tool, etc. The head 1 comprises a body 2 preferably of steel, having a shank 3 formed with a threaded blind-hole 4 along its longitudinal axis for engagement by a threaded end of a member of the said device, not illustrated. In a different constructional solution, the shank 3 could have external threading for engaging a threaded hole in the said member. The body 2 also has an eye 5 with an axis orthogonal to the longitudinal axis of the shank 3. The head 1 further includes a ball 6 formed with a diametral through-hole 7 for engagement by the end of a second member of the device, not illustrated. The ball 6 is preferably made from steel and is housed within a ring 8 of sintered material, for example sintered steel or bronze. As is known, the sintering process causes the formation of pores within the material. The ring 8 is impregnated with a predetermined lubricant which fills the pores in the material. The ball 6, due to the construction which will be described below, is free to rotate about its own centre but remains captive within the ring 8. The complex comprising the ring 8 and the ball 6 is force fitted in the eye 5. Finally, an annular groove 11 is formed in the central part of the outer lateral wall of the ring 8 and, in use, is closed by the inner surface of the eye 5 and constitutes a reservoir for the storage of the lubricant.

A particular known method for the construction of the head 1, provides:
a first stage in which the ball body 6 is fitted into the ring 8;
a second stage in which the ring 8 is pressed around the spherical body 6 so that it moulds itself thereto;
a third stage in which the rounded surface formed on the outside of the ring 8 as a result of the pressing is ground and in which bevels are formed around the side edges of the outer surface of the ring 8 as a result of this grinding;
a fourth stage in which the complex comprising the ring 8 and the ball 6 is fitted into the eye 5 of the body 2 which may be made by turning or punching; and
a fifth stage in which the side edges of the inner surface of the eye 5 are bevelled in such a way that the material of the bevelled edges fills the corresponding bevels of the ring 8 to clamp this in the body 2.

Compared with the known heads described above, the ring 8 of the head 1 is of sintered material whereby, during the construction of the head 1, one of more stages are needed in which the pores formed in the ring 8 during the sintering of the material are impregnated with lubricant and in which a quantity of lubricant fills the chamber defined by the groove 11. The impregnation may be carried out selectively either before and/or after the pressing of the ring 8 and/or after the grinding thereof, and/or on the finished piece. The impregnation may be achieved with the lubricant in liquid or in solid form. In the case of a lubricant in liquid form the impregnation is effected by immersion in the lubricant either heated and/or under vacuum. In use, when the temperature at the surface of contact between the ring 8 and the ball 6 rises, the lubricant leaves the pores and the groove 11 and moves to lubricate this surface of contact while, when the temperature falls, most of the lubricant returns to the groove 11 and to the pores. The greater the number of pores and the greater their depth, the greater the quantity of lubricant which permeates the ring 8.

From what has been described above, the advantages achieved by the present invention will be clear.

In particular, with the use of a ring of sintered material impregnated with lubricant, a ball joint head is formed which has a simple structure and which is cheap to produce in that external device for the continuous supply of lubricant or layers of antifriction material which, as already indicated, involve certain very expensive forms of working, are not required. Moreover the contact surface in the head 1 is lubricated automatically to the extent that such lubrication is necessary, that is, when the temperature rises. Finally no increase in the limited clearance between the ring 8 and the ball body 6 in the head 1 is found to occur whereby a precise ball joint is formed.

Finally it is clear that the head 1 described and illustrated may be modified and varied without thereby departing from the scope of protection of the present invention.

In particular, as already indicated, the lubricant could be in liquid form or in solid form and in this case could consist of graphite, certain resins or other similar materials. Moreover the part of the ring 8 which must be porous is the surface which contacts the ball 6, whereby it could be possible to sinter the ring 8 only partially, with the aim of sintering only the surface of contact and the layer next to this surface, or a suitable layer of sintered material could be added to the inner surface of the ring 8.

## Claims

1. A ball joint head adapted to be coupled to a drive device such as a shaft of a pneumatic or hydraulic actuator, an arm of an automatic or machine tool, etc, and including:
a first spherical body (6), preferably of steel, formed with a diametral through-hole (7) for engagement by a first member of the device;
a ring (8) in which the first body (6) is forcedly housed but free to rotate about its own centre; and
a second body (2), preferably of steel, having a shank (3) formed with screw threading selected from external and internal threading for a mechanical connection to a second member of the device, and having an eye (5) in which the ring (8) is fitted;
characterised in that at least the inner layer of the ring (8) next to the surface of contact with the second body (6) is formed from sintered material so as to define pores within the material and in that the pores are impregnated with a predetermined lubricant which fills the pores in the material.

2. A head according to Claim 1, characterised in that the lubricant is in liquid form.

3. A head according to Claim 1, characterised in that the lubricant is in solid form.

4. A head according to any one of the preceding claims, characterised in that the ring (8) is bronze based.

5. A head according to any one of Claims 1 to 3, characterised in that the ring (8) is iron based.

6. A head according to any one of the preceding Claims, characterised in that the ring (8) is made completely of sintered material.

7. A head according to Claim 6, characterised in that an annular groove (11) is formed in the central part of the outer lateral wall of the ring (8) and is closed by the inner surface of the eye (5) and constitutes a reservoir for storage of the lubricant.

8. A head according to any one of Claims 11 to 5, characterised in that only that layer of the ring (8) next to the surface of contact is of sintered material.

9. A head according to any one of Claims 1 to 5, characterised in that the surface of contact is defined by a layer of sintered material which is added to the inner surface of the ring (8).
